Europäisches Patentamt

European Patent Office

Office européen des brevets

(19)

(11) **EP 1 261 229 A2**

(12) **EUROPÄISCHE PATENTANMELDUNG**

(43) Veröffentlichungstag:
 **27.11.2002 Patentblatt 2002/48**

(51) Int Cl.⁷: **H04Q 7/38**

(21) Anmeldenummer: **02100507.9**

(22) Anmeldetag: **17.05.2002**

(84) Benannte Vertragsstaaten:
 **AT BE CH CY DE DK ES FI FR GB GR IE IT LI LU MC NL PT SE TR**
 Benannte Erstreckungsstaaten:
 **AL LT LV MK RO SI**

(30) Priorität: **21.05.2001 DE 10124940**

(71) Anmelder:
 • **Philips Corporate Intellectual Property GmbH**
  **20099 Hamburg (DE)**
  Benannte Vertragsstaaten:
  **DE**
 • **Koninklijke Philips Electronics N.V.**
  **5621 BA Eindhoven (NL)**
  Benannte Vertragsstaaten:
  **AT BE CH CY DE ES FI FR GB GR IE IT LU MC NL PT SE TR**

(72) Erfinder: **Herrmann, Christoph, Dr.**
 **52066 Aachen (DE)**

(74) Vertreter: **Volmer, Georg, Dipl.-Ing. et al**
 **Philips Corporate Intellectual Property GmbH,**
 **Postfach 50 04 42**
 **52088 Aachen (DE)**

(54) **Netzwerk mit logischen Kanälen und Transportkanälen**

(57) Die Erfindung bezieht sich auf ein Netzwerk mit einer ersten Anzahl von logischen Kanälen, denen eine zweite Anzahl von Transportkanälen zugeordnet ist,
wobei die Transportkanäle zur Übertragung von aus Paketeinheiten der logischen Kanäle gebildeten Transportblöcken vorgesehen sind,
wobei den Transportkanälen eine Anzahl von gültigen Transport-Format-Kombinationen zugewiesen ist, welche die zur Übertragung vorgesehenen Transportblöcke auf jedem Transportkanal angeben,
wobei ein Auswahlalgorithmus zur Auswahl der Transport-Format-Kombinationen vorgesehen ist
und wobei vorgesehen ist, die Auswahl der Transport-Format-Kombinationen unter Berücksichtigung einer für den jeweiligen logischen Kanal vorgesehenen minimalen Bitrate durchzuführen.

FIG. 2

**Beschreibung**

Die Erfindung bezieht sich auf ein Netzwerk mit einer ersten Anzahl von logischen Kanälen, denen eine zweite Anzahl von Transportkanälen zugeordnet ist,

wobei die Transportkanäle zur Übertragung von aus Paketeinheiten der logischen Kanäle gebildeten Transportblöcken vorgesehen sind

Ein derartiges Netzwerk ist aus 3$^{rd}$ Generation Partnership Project (3GPP); Technical Specification Group (TSG) RAN; Working Group 2 (WG2); Radio Interface Protocol Architecture; TS 25.302 V3.6.0) bekannt, welches die Funktion der MAC-Schicht (MAC = Medium Access Control) eines Funknetzwerks beschreibt. Eine physikalische Schicht bietet der MAC-Schicht Transportkanäle bzw. Transportverbindungen an. Die MAC-Schicht stellt einer RLC-Schicht (RLC = Radio Unk Control) logische Kanäle bzw. logische Verbindungen zur Verfügung. Die in der RLC-Schicht gebildeten Paketeinheiten werden in der MAC-Schicht in Transportblöcke verpackt, die von der physikalischen Schicht über physikalische Kanäle von der Funknetzwerk-Steuerung zu einem Terminal oder umgekehrt übertragen werden. Außer einer solchen Multiplex- bzw. Demultiplex-Funktion hat die MAC-Schicht die Funktion, geeignete Transport-Format-Kombinationen (Transport Format Combination = TFC) auszuwählen. Eine Transport-Format-Kombination stellt eine Kombination von Transport-Formaten für jeden Transportkanal dar. Die Transport-Format-Kombination beschreibt u.a. wie die Transportkanäle in der physikalischen Schicht in einen physikalischen Kanal gemultiplext werden.

Der Erfindung liegt die Aufgabe zugrunde, ein Netzwerk zu schaffen, welches einen optimierten Selektionsprozess zur Auswahl einer geeigneten Transport-Format-Kombination angibt.

Diese Aufgabe wird erfindungsgemäß gelöst durch ein Netzwerk mit einer ersten Anzahl von logischen Kanälen, denen eine zweite Anzahl von Transportkanälen zugeordnet ist,

wobei die Transportkanäle zur Übertragung von aus Paketeinheiten der logischen Kanäle gebildeten Transportblöcken vorgesehen sind,

wobei den Transportkanälen eine Anzahl von gültigen Transport-Format-Kombinationen zugewiesen ist, welche die zur Übertragung vorgesehenen Transportblöcke auf jedem Transportkanal angeben,

wobei ein Auswahlalgorithmus zur Auswahl der Transport-Format-Kombinationen vorgesehen ist

und wobei vorgesehen ist, die Auswahl der Transport-Format-Kombinationen unter Berücksichtigung einer für den jeweiligen logischen Kanal vorgesehenen minimalen Bitrate durchzuführen

Unter einer gültigen Transport-Format-Kombination wird eine Kombination verstanden, welche signalisierbar ist. Die Signalisierung der Transport-Format-Kombinationen erfolgt mittels Signalisierungsbits, welche der jeweiligen Empfangsseite anzeigen, welche Transport-Format-Kombination zur Übertragung verwendet wurde Die Anzahl der Signalisierungsbits, die zur Signalisierung zur Verfügung stehen, sind insbesondere in drahtlosen Netzwerken beschränkt. Dies hat zur Folge, dass nicht alle der möglichen Transport-Format-Kombinationen signalisierbar und somit gemäß der obigen Definition gültig sind Die Menge der gültigen Transport-Format-Kombinationen ist vielmehr durch die Anzahl der zur Verfügung stehenden Signalisierungsbits beschränkt.

Der Erfindung liegt die Idee zugrunde, in den Auswahlalgorithmus zur Auswahl einer geeigneten bzw. optimalen Transport-Format-Kombination die Bedingung zu integrieren, dass eine für die logischen Kanäle vorgesehene minimale Bitrate garantiert werden kann. Eine solche minimale Bitrate wird oftmals durch die jeweilige Applikation vorgegeben. So benötigt eine Sprachverbindung in der Regel eine konstante Bitrate, die dann mit der hier vorgegebenen minimalen Bitrate zusammenfällt. Solche minimalen Bitraten als Merkmale der von einer Applikation gewünschten Dienstgüte für die logischen Kanäle sind z.B. gemäß der Spezifikation 3rd Generation Partnership Project; Technical Specification Group Services and System Aspects; "QoS Concept and Architecture" TS23.107v350 vorgegeben.

Der Vorteil einer solchen Integration der minimalen Bitraten-Bedingung in den TFC-Auswahlalgorithmus liegt insbesondere darin, dass beide Funktionen (TFC-Auswahl, Erfüllung der minimalen Bitraten-Bedingung) in einer gemeinsamen Einheit der Mobilstation bzw. des Netzwerks implementiert werden können. Die Implementierung ist sowohl in Software als auch in Hardware möglich.

Unter der Bedingung der zu berücksichtigenden minimalen Bitrate wird verstanden, dass bei der Auswahl der TFC möglichst versucht wird, dass die minimale Bitrate bezogen auf ein vorgegebenes Messintervall bei der Auswahl der TFC eingehalten wird. Falls dies aber aufgrund der auf den einzelnen logischen Kanälen zur Verfügung stehenden Paketeinheiten nicht möglich ist, können auch TFCs ausgewählt werden, welche die minimale Bitrate unterschreiten.

Eine vorteilhafte Möglichkeit, eine Sicherungsfunktion zur Berücksichtigung und Einhaltung der minimalen Bitrate zu implementieren, besteht darin, ein gleitendes Messfenster von z.B. 5 Zeitübertragungsintervallen TTI vorzusehen.

Ein Übertragungszeitintervall TTI entspricht einer Anzahl von Funkrahmen (RF) und beträgt mindestens einen Funkrahmen. Es gibt die Anzahl der Funkrahmen an, über die sich das Interleaving erstreckt. Beim Interleaving handelt es sich um ein sendeseitiges, zeitliches Verschachteln von Informationseinheiten (Symbolen) aus aufeinanderfolgenden Funkrahmen. Die MAC-Schicht liefert eine Transportblockmenge während jedes Übertragungszeitintervalls zur physikalischen Schicht. Das Übertragungszeitintervall ist für einen Transportkanal spezifisch und gehört zum semi-statischen Teil des Transport-Formates. Empfängt die physikalische Schicht zu Beginn eines Übertragungszeitintervalls, das n Funkrahmen umfasst, von der MAC-Schicht eine Transportblockmenge, die zur Übertragung auf einem Transportkanal bestimmt ist, so wird jeder Transportblock dieser Menge in n Segmente zerlegt (Segmentierung von Transportblöcken). Die n Segmente jedes Transportblockes werden in den n aufeinanderfolgenden Funkrahmen des Übertragungszeitintervalls übertragen. Dabei weisen alle n Funkrahmen des Übertragungszeitintervalls dieselbe Reihenfolge der Segmente auf.

Das gleitende Messfenster zur Messung der Bitrate wird dabei gleitend jeweils um ein TTI verschoben, wobei jeweils die Bitrate der letzten 4 TTIs gemessen wird. Aus der gemessenen Bitrate der letzten 4 TTIs wird dann die Anzahl der in dem gegenwärtigen 5. TTI zu übertragenden Transportblöcke bestimmt, sodass die minimale Bitrate eingehalten wird.

Ein weiterer Vorteil der Erfindung liegt darin, dass die Bestimmung der minimalen Bitrate durch Implementierung des gleitenden Messfensters und die Erzwingung der Einhaltung der minimalen Bitrate auf der Ebene der MAC-Schicht erfolgen kann. Gegenüber der separaten Implementierung einer Funktion zur Überwachung der Einhaltung der minimalen Bitrate etwa auf Applikationsebene bietet dies den Vorteil, dass die Messung auf der Ebene der MAC-Schicht genauer ist, da hier Steuerinformation, die in der MAC-Schicht und in der RLC-Schicht hinzugefügt werden (z.B. die MAC- und RLC-Header) in die Messung direkt mit einbezogen werden können, da diese in den Transportblöcken enthalten sind.

Bei der vorteilhaften Ausgestaltung der Erfindung gemäß Anspruch 2 wird bei dem Auswahlalgorithmus zur Auswahl einer geeigneten bzw. optimalen Transport-Format-Kombination die Bedingung berücksichtigt und integriert, dass eine für die logischen Kanäle vorgesehene maximale Bitrate eingehalten wird. Die Berücksichtigung einer derartigen maximalen Bitrate für die einzelnen logischen Kanäle, die im Zuweisungsalgorithmus vorzugsweise nacheinander abgefragt werden, stellt sicher, dass niedriger priorisierte logische Kanäle in einem TTI auch dann noch Paketeinheiten senden können, wenn in den Warteschlangen der höher priorisierten logischen Kanäle so viele Paketeinheiten warten, dass niedriger priorisierte logische Kanäle ohne Berücksichtigung der maximalen Bitrate gar keine Paketeinheiten mehr senden können. Somit stellt die Vorgabe einer maximalen Bitrate eine den jeweiligen maximalen Bitraten entsprechende Verteilung der zur Verfügung stehenden Übertragungskapazität sicher. Solche maximalen Bitraten für die logischen Kanäle als Merkmale der von einer Applikation gewünschten Dienstgüte sind z.B. gemäß der Spezifikation 3rd Generation Partnership Project; Technical Specification Group Services and System Aspects; "QoS Concept and Architecture" TS23.107v350 vorgegeben.

Die maximale Bitrate kann als absolute Obergrenze während des gesamten Auswahlalgorithmus berücksichtigt werden. Dies bedeutet, dass bei der letztlich ausgewählten TFC die maximale Bitrate nicht überschritten wird. Die maximale Bitrate kann aber auch nur temporär, z.B. nur während eines Teilalgorithmus oder eines Teilschrittes bei der Auswahl berücksichtigt werden Insbesondere ist es möglich, die Bedingung der nicht zu überschreitenden maximalen Bitrate am Ende des Auswahlalgorithmus aufzulösen und die noch verbliebenen Paketeinheiten so weit wie möglich zuzuweisen.

Bei dem vorteilhaften Auswahlalgorithmus gemäß Anspruch 3 weist der Auswahlalgorithmus eine erste Zuteilungssequenz auf. Bei dieser ersten Zuteilungssequenz werden die logischen Kanäle nacheinander abgearbeitet und die in den Speichern der logischen Kanäle wartenden Paketeinheiten werden jeweils unter Berücksichtigung zweier Kriterien den zugsordneten Transportkanälen zugewiesen. Eine Paketeinheit, die in dieser ersten Zuteilungssequenz einem Transportkanal zur Übertragung zugewiesen ist, wird am Ende des Auswahlalgorithmus auf jeden Fall berücksichtigt, d.h. übertragen. Dies bedeutet, dass mit jeder Zuweisung von Paketeinheiten die Menge der gültigen Transport-Format-Kombinationen, die die Übertragung der bisher zugewiesenen Paketeinheiten und die Übertragung der neu zugewiesenen Paketeinheiten erlauben, sukzessive verkleinert wird.

Die Abarbeitung der logischen Kanäle erfolgt vorzugsweise nach deren Priorität, d.h. es wird mit dem logischen Kanal mit der höchsten Priorität begonnen, dann folgt der logische Kanal mit der zweithöchsten Priorität u.s.w.

Als erstes Kriterium wird berücksichtigt, dass jeweils nur so viele Paketeinheiten zugewiesen werden, dass die Summe aus der dem jeweiligen Transportkanal bisher zugewiesenen Paketeinheiten und den diesem Transportkanal neu zugewiesenen Paketeinheiten einem Transportformat entspricht, das in einer gültigen Transport-Format-Kombination enthalten ist. Dies bedeutet, dass gewährleistet ist, dass keine Leerpaketeinheiten übertragen werden, auch wenn dem Transportkanal nachfolgend keine weiteren Paketeinheiten mehr zugewiesen werden. Das Ergänzen von Leerpaketeinheiten wird vielfach auch als Padding bezeichnet.

Als zweites Kriterium, das jedoch dem ersten Kriterium nachgeordnet ist, wird berücksichtigt, dass die Anzahl der jeweils zugewiesenen Paketeinheiten so gewählt wird, dass sie der für den jeweiligen logischen Kanal vorgesehenen minimalen Bitrate möglichst nahe kommt. Falls weniger Paketeinheiten auf dem logischen Kanal zur Verfügung stehen, als für die minimale Bitrate erforderlich ist, werden somit möglichst alle vorhandenen Paketeinheiten zugewiesen, sofern dies eine gültige TFC ergibt. Falls mehr Paketeinheiten auf dem logischen Kanal zur Verfügung stehen, als für die minimale Bitrate erforderlich ist, wird möglichst nur eine der minimalen Bitrate entsprechende Anzahl von Paketeinheiten zugewiesen, sofern dies eine gültige TFC ergibt.

Nach der ersten Zuteilungssequenz ist eine weitere Zuteilungssequenz vorgesehen, in der eine weitere Zuteilung von noch verbliebenen Paketeinheiten erfolgt. Dabei werden die logischen Kanäle erneut seriell abgearbeitet, vorzugsweise geordnet nach deren Priorität.

Eine derartige zweistufige Zuteilung hat den Vorteil, dass in den Auswahlalgorithmus in der ersten Zuteilungssequenz die Bedingung der zu berücksichtigenden minimalen Bitrate integriert ist und daher die minimale Bitrate für alle logischen Kanäle, soweit möglich, garantiert ist. Dies bewirkt eine angemessene Berücksichtigung aller logischen Kanäle bei der Zuteilung.

Anspruch 4 betrifft eine vorteilhafte Ausgestaltung der zweiten Zuteilungssequenz. Als Kriterium mit der höchsten Priorität ist dabei ebenfalls vorgesehen, keine Übertragung von Leerpaketeinheiten (Padding) zuzulassen.

Unter Berücksichtigung dieses Kriteriums wird versucht, möglichst viele Paketeinheiten der logischen Kanäle zuzuweisen, wobei die für den jeweiligen logischen Kanal vorgesehene maximale Bitrate nicht überschritten werden darf.

Dieser bewirkt eine verbesserte angemessene Berücksichtigung aller logischen Kanäle bei der Zuteilung.

Die sich an die zweite Zuteilungssequenz anschließende dritte Zuteilungssequenz gemäß Anspruch 5 unterscheidet sich von ersterer lediglich dadurch, dass die Bedingung der einzuhaltenden maximalen Bitrate nicht mehr berücksichtigt wird. Die Auflösung dieser Bedingung in der dritten Sequenz ist vorteilhaft, wenn insgesamt möglichst viele Paketeinheiten übertragen werden sollen. Diese Auflösung erfolgt bei dieser Ausgestaltung der Erfindung nicht schon in der zweiten Zuteilungssequenz, weil dann nieder priorisierte logische Kanäle bei der Zuteilung hinsichtlich ihrer Anforderungen an die maximale Bitrate benachteiligt würden.

Es ist jedoch auch möglich, den Auswahlalgorithmus nach der zweiten Zuteilungssequenz zu beenden. Dies hat den Vorteil, dass die Gesamtbitrate geringer ist und somit auch die erforderliche Sendeleistung. Damit sinkt auch die resultierende Interferenz für benachbarte Funkzellen.

Bei der vorteilhaften Ausgestaltung der Erfindung gemäß Anspruch 6 wird die Bedingung der einzuhaltenden maximalen Bitrate bereits während der zweiten Zuteilungssequenz aufgehoben und nicht mehr berücksichtigt, allerdings nur für den letzten logischen Kanal, der einem Transportkanal zugeordnet ist. Die Auflösung der Bedingung der einzuhaltenden maximalen Bitrate kann aber auch früher erfolgen, z.B. für den zweitletzten logischen Kanal, der einem Transportkanal zugeordnet ist. Der letzte logische Kanal, bei dem die maximale Bitratenbedingung aufgehoben wird, kann dann so viele Paketeinheiten wie möglich absetzen, sofern noch entsprechend geeignete gültige Transport-Format-Kombinationen zur Verfügung stehen.

Die Erfindung bezieht sich auch auf eine Funknetzwerk-Steuerung und ein Terminal in einem drahtlosen Netzwerk sowie auf ein Verfahren zur Auswahl einer Transport-Format-Kombination.

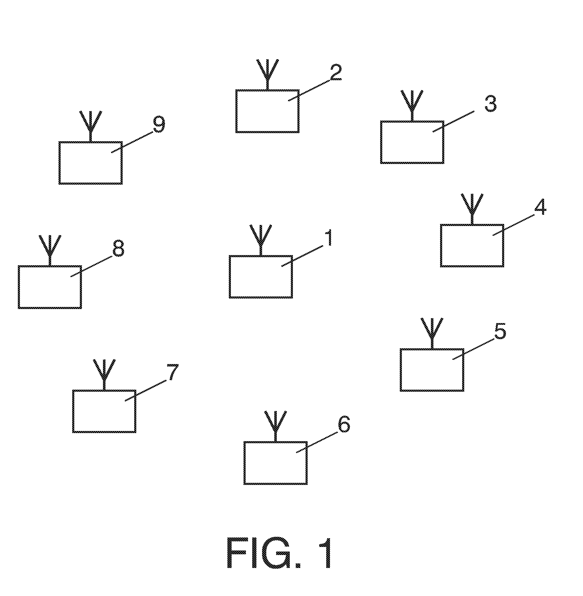

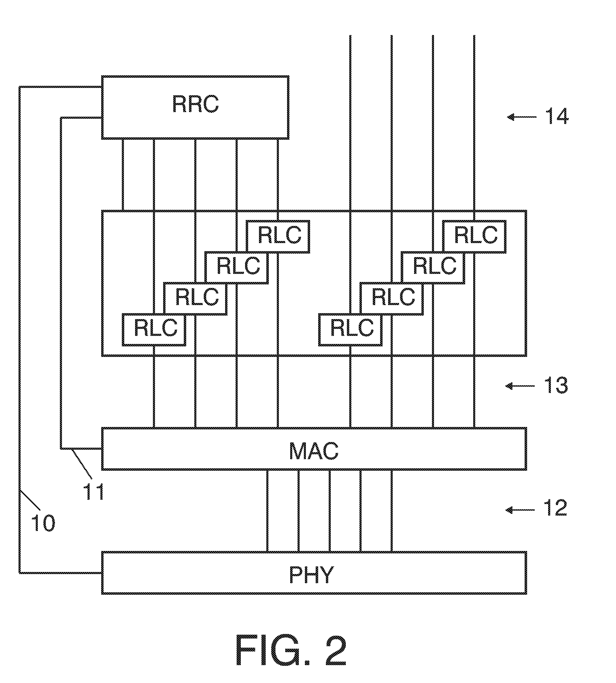

Einige Ausführungsbeispiele der Erfindung werden nachstehend anhand der Zeichnung in den Fig. 1 und 2 näher erläutert. Es zeigen:

Fig. 1    ein drahtloses Netzwerk mit einer Funknetzwerk-Steuerung und mehreren Terminals,
Fig. 2    ein Schichtenmodell zur Erläuterung verschiedener Funktionen eines Terminals oder einer Funknetzwerk-Steuerung und

In Fig. 1 ist ein drahtloses Netzwerk, z.B. Funknetzwerk, mit einer Funknetzwerk-Steuerung (Radio Network Controller = RNC) 1 und mehreren Terminals 2 bis 9 dargestellt. Die Funknetzwerk-Steuerung 1 ist für Steuerung aller am Funkverkehr beteiligten Komponenten verantwortlich, wie z.B. der Terminals 2 bis 9. Ein Steuer- und Nutzdatenaustausch findet zumindest zwischen der Funknetzwerk-Steuerung 1 und den Terminals 2 bis 9 statt. Die Funknetzwerk-Steuerung 1 baut jeweils eine Verbindung zur Übertragung von Nutzdaten auf.

In der Regel sind die Terminals 2 bis 9 Mobilstationen und die Funknetzwerk-Steuerung 1 ist fest installiert. Eine Funknetzwerk-Steuerung 1 kann gegebenenfalls aber auch beweglich bzw. mobil sein.

In dem drahtlosen Netzwerk werden beispielsweise Funksignale nach dem FDMA-, TDMAoder CDMA-Verfahren (FDMA= frequency division multiplex access, TDMA = time division multiplex access, CDMA= code division multiplex access) oder nach einer Kombination der Verfahren übertragen.

Beim CDMA-Verfahren, das ein spezielles Code-Spreiz-Verfahren (code spreading) ist, wird eine von einem Anwender stammende Binärinformation (Datensignal) mit jeweils einer unterschiedlichen Codesequenz moduliert. Eine solche Codesequenz besteht aus einem pseudo-zufälligen Rechtecksignal (pseudo noise code), dessen Rate, auch Chiprate genannt, in der Regel wesentlich höher als die der Binärinformation ist. Die Dauer eines Rechteckimpulses des pseudo-zufälligen Rechtecksignals wird als Chipintervall $T_c$ bezeichnet. $1/T_c$ ist die Chiprate. Die Multiplikation bzw. Modulation des Datensignals mit dem pseudo-zufälligen Rechtecksignal hat eine Spreizung des Spektrums um den Spreizungsfaktor $N_c = T/T_c$ zur Folge, wobei T die Dauer eines Rechteckimpulses des Datensignals ist.

Nutzdaten und Steuerdaten zwischen wenigstens einem Terminal (2 bis 9) und der Funknetzwerk-Steuerung 1 werden über von der Funknetzwerk-Steuerung 1 vorgegebene Kanäle übertragen. Ein Kanal ist durch einen Frequenzbereich, einen Zeitbereich und z.B. beim CDMA-Verfahren durch einen Spreizungscode bestimmt. Die Funkverbindung von der Funknetzwerk-Steuerung 1 zu den Terminals 2 bis 9 wird als Downlink und von den Terminals zur Basisstation als Uplink bezeichnet. Somit werden über Downlink-Kanäle Daten von der Basisstation zu den Terminals und über Uplink-Kanäle Daten von Terminals zur Basisstation gesendet.

Beispielsweise kann ein Downlink-Steuerkanal vorgesehen sein, der benutzt wird, um von der Funknetzwerk-Steuerung 1 Steuerdaten vor einem Verbindungsaufbau an alle Terminals 2 bis 9 zu verteilen. Ein solcher Kanal wird als Downlink-Verteil-Steuerkanal (broadcast control channel) bezeichnet. Zur Übertragung von Steuerdaten vor einem Veribindungsaufbau von einem Terminal 2 bis 9 zur Funknetzwerk-Steuerung 1 kann beispielsweise ein von der Funknetzwerk-Steuerung 1 zugewiesener Uplink-Steuerkanal verwendet werden, auf den aber auch andere Terminals 2 bis 9 zugreifen können. Ein Uplink-Kanal, der von mehreren oder allen Terminals 2 bis 9 benutzt werden kann, wird als gemeinsamer Uplink-Kanal (common uplink channel) bezeichnet. Nach einem Verbindungsaufbau z.B. zwischen einem Terminal 2 bis 9 und der Funknetzwerk-Steuerung 1 werden Nutzdaten über einen Downlink- und ein Uplink-Nutzkanal übertragen. Kanäle, die nur zwischen einem Sender und einem Empfänger aufgebaut werden, werden als dedizierte Kanäle bezeichnet. In der Regel ist ein Nutzkanal ein dedizierter Kanal, der von einem dedizierten Steuerkanal zur Übertragung von verbindungsspezifischen Steuerdaten begleitet werden kann.

Damit Nutzdaten zwischen der Funknetzwerk-Steuerung 1 und einem Terminal ausgetauscht werden können, ist es erforderlich, dass ein Terminal 2 bis 9 mit der Funknetzwerk-Steuerung 1 synchronisiert wird. Beispielsweise ist aus dem GSM-System (GSM = Global System for Mobile communication) bekannt, in welchem eine Kombination aus FDMAund TDMA-Verfahren benutzt wird, dass nach der Bestimmung eines geeigneten Frequenz-bereichs anhand vorgegebener Parameter die zeitliche Position eines Rahmens bestimmt wird (Rahmensynchronisation), mit dessen Hilfe die zeitliche Abfolge zur Übertragung von Daten erfolgt. Ein solcher Rahmen ist immer für die Datensynchronisation von Terminals und Basisstation bei TDMA-, FDMA- und CDMA-Verfahren notwendig Ein solcher Rahmen kann verschiedene Unter- oder Subrahmen enthalten oder mit mehreren anderen aufeinanderfolgenden Rahmen einen Superrahmen bilden.

Der Steuer- und Nutzdatenaustausch über die Funkschnittstelle zwischen der Funknetzwerk-Steuerung 1 und den Terminals 2 bis 9 kann mit dem in Fig 2 dargestellten, beispielhaften Schichtenmodell oder Protokollarchitektur (vgl. z.B. 3rd Generation Partnership Project (3GPP); Technical Specification Group (TSG) RAN; Working Group 2 (WG2); Radio Interface Protocol Architecture; TS 25.301 V3.6.0) erläutert werden. Das Schichtenmodell besteht aus drei Protokollschichten: der physikalischen Schicht PHY, der Datenveribindungsschicht mit den Unterschichten MAC und RLC (in Fig 2 sind mehrere Ausprägungen der Unterschicht RLC dargestellt) und der Schicht RRC. Die Unterschicht MAC ist für die Medienzugriffssteuerung (Medium Access Control), die Unterschicht RLC für die Funkverbindungssteuerung (Radio Link Control) und die Schicht RRC für die Funkverwaltungssteuerung (Radio Resource Control) zuständig. Die Schicht RRC ist für die Signalisierung zwischen den Terminals 2 bis 9 und der Funknetzwerk-Steuerung 1 verantwortlich. Die Unterschicht RLC dient zur Steuerung einer Funkverbindung zwischen einem Terminal 2 bis 9 und der Funknetzwerk-Steuerung 1. Die Schicht RRC steuert die Schichten MAC und PHY über Steuerungsverbindungen 10 und 11. Hiermit kann die Schicht RRC die Konfiguration der Schichten MAC und PHY steuern. Die physikalische Schicht PHY bietet der MAC-Schicht Transportkanäle bzw. Transportverbindungen 12 an. Die MAC-Schicht stellt der RLC-Schicht logische Kanäle bzw. logische Verbindungen 13 zur Verfügung. Die RLC-Schicht ist über Zugangspunkte 14 von Applikationen erreichbar.

In der RLC-Schicht werden Paketeinheiten gebildet und in der MAC-Schicht in Transportblöcke verpackt, die von der physikalischen Schicht über physikalische Kanäle von der Funknetzwerk-Steuerung zu einem Terminal oder umgekehrt übertragen werden. Außer einer solchen Multiplex- bzw. Demultiplex-Funktion hat die MAC-Schicht die Funktion, geeignete Transport-Format-Kombinationen (Transport Format Combination = TFC) auszuwählen. Eine Transport-Format-Kombination stellt eine Kombination von Transport-Formaten für jeden Transportkanal dar. Die Transport-Format-Kombination beschreibt u.a. wie die Transportkanäle in der physikalischen Schicht in einen physikalischen Kanal gemultiplext (Zeitmultiplex) werden.

Jedes Transport-Format weist einen dynamischen und einem semi-statischen Teil auf. Der dynamische Teil beschreibt eine Transportblockmenge (Transport Block Set = TBS), die während eines Übertragungszeitintervalls (Transmission Time Interval = TTI) in einem Transportkanal übertragen wird, und der semi-statische Teil beinhaltet beispielsweise Informationen über die Art der fehlerkorrigierenden Codierung. Der semi-statische Teil ändert sich nur durch eine Rekonfigurierung des physikalischen Kanals Eine Transportblockmenge ist als eine Menge von Transportblöcken definiert, welche zwischen der physikalischen Schicht und der MAC-Schicht ausgetauscht werden. Die Größe eines Transportblocks ist durch die Anzahl von Bits einer Paketeinheit der RLC-Schicht und der Anzahl von Bits von hinzugefügten Steuerinformationen (Header) der MAC-Schicht bestimmt.

Im folgenden wird unter dem Transport-Format nur der dynamische Teil des Transport-Formates verstanden.

Ein Übertragungszeitintervall entspricht einer Anzahl von Funkrahmen (RF) und beträgt mindestens einen Funkrahmen. Es gibt die Anzahl der Funkrahmen an, über die sich das Interleaving erstreckt. Beim Interleaving handelt es sich um ein sendeseitiges, zeitliches Verschachteln von Informationseinheiten (Symbolen) aus aufeinanderfolgenden Funkrahmen. Die MAC-Schicht liefert eine Transportblockmenge während jedes Übertragungszeitintervalls zur physikalischen Schicht. Das Übertragungszeitintervall ist für einen Transportkanal spezifisch und gehört zum semistatischen Teil des Transport-Formates. Empfängt die physikalische Schicht zu Beginn eines Übertragungszeitintervalls, das n Funkrahmen umfasst, von der MAC-Schicht eine Transportblockmenge, die zur Übertragung auf einem Transportkanal bestimmt ist, so wird jeder Transportblock dieser Menge in n Segmente zerlegt (Segmentierung von Transportblöcken). Die n Segmente jedes Transportblockes werden in den n aufeinanderfolgenden Funkrahmen des Übertragungszeitintervalls übertragen. Dabei weisen alle n Funkrahmen des Übertragungszeitintervalls dieselbe Reihenfolge der Segmente auf.

Die MAC-Schicht dient dazu, das geeignete Transport-Format für jeden Transportkanal auszuwählen. Bei dieser Auswahl müssen die Prioritäten der logischen Kanäle zwischen RLCund MAC-Schicht, die im folgenden MAC-Priorität (MAC Logical Priority = MLP) genannt wird, die Belegung der Warteschlangen in der RLC-Schicht (Buffer Occupancies = BO), die Übertragungszeitintervalle TTI der den logischen Kanäle zugeordneten Transportkanäle und Untermengen von Transport-Format-Kombinationen berücksichtigt werden. Eine Warteschlange in der RLC-Schicht enthält Paketeinheiten, die von der RLC-Schicht über die MAC-Schicht zur physikalischen Schicht zu übertragen sind. Eine Untermenge der Transport-Format-Kombination ist ein Teil der möglichen Gesamtmenge von Transport-Format-Kombinationen. Untermengen werden verwendet, um die Anzahl der möglichen Transport-Format-Kombinationen zu begrenzen, da die Anzahl der Bits, mit denen der Empfangsseite angezeigt wird, welche Transport-Format-Kombination zur Übertragung verwendet wurde, ebenfalls begrenzt ist.

Ein Transportkanal (bzw. der oder die auf ihn abgebildeten logischen Kanäle) wird (bzw. werden) als im Funkrahmen inaktiv bezeichnet, wenn der Beginn des Funkrahmens nicht mit dem Beginn des Übertragungszeitintervalls des Transportkanals übereinstimmt. Im anderen Fall heißt er (bzw. heißen sie) aktiv. Beim kürzesten Übertragungszeitintervall entsprechend der Länge eines Funkrahmens von beispielsweise 10 ms ist der zugeordnete Transportkanal niemals inaktiv, da ein Transportblock mindestens dieses kürzeste Übertragungszeitintervall zur Übertragung seiner Daten benötigt. Bei längeren Übertragungszeitintervallen (z.B. 20 ms) kann ein Transportkanal in diesem Sinne inaktiv sein.

In der MAC-Schicht wird jeweils zu Beginn eines Funkrahmens ein Auswahlalgorithmus zur Auswahl einer optimalen Transport-Format-Kombination ausgeführt. Dieser Algorithmus kann softwaremäßig oder hardwaremäßig in der Mobilstation bzw. im Netzwerk implementiert werden.

Zunächst werden einige Parameter und Variablen zur Darstellung und Erläuterung des Auswahlalgorithmus definiert:

Es bedeuten:

S2: die Menge aller Transport-Format-Kombinationen TFC innerhalb der Menge TFCS aller Transport-Format-Kombinationen, welche bei der gegenwärtigen maximalen Sendeleistung der Mobilstation unterstützt werden können.

TF(t): eine Anzahl von Transportblöcken vorgegebener Größe, die auf Transportkanal TC t, mit t=1, ..., $N_{TC}$, übertragen werden, wobei $N_{TC}$ die Anzahl der Transportkanäle repräsentiert.

Eine Transportformatkombination TFC ist hier definiert als TFC=( TF(1), TF(2), ..., TF($N_{TC}$)), wobei dabei ignoriert wird, dass ein Transportformat außerdem semi-statische Attribute beinhaltet, z.B. das Verfahren für die fehlerkorrigierende Codierung.

BO(L): die Pufferbelegung BO (buffer occupancy) des logischen Kanals LC L, mit L=1, ..., $N_{LC}$, wobei $N_{LC}$ die Anzahl der logischen Kanäle repräsentiert.

Dabei sind die logischen Kanäle in der Reihenfolge abfallender Priorität nummeriert, d.h. LC 1 hat die höchste, LC $N_{LC}$ hat die niedrigste Priorität, und je kleiner die Nummer desto höher die Priorität.

Logische Kanäle mit unterschiedlicher aber benachbarter Nummer können dieselbe Priorität haben.

Für den Fall, dass logische Kanäle mit gleicher Priorität (und damit benachbarten Nummern) vorhanden sind, die auf Transportkanäle abgebildet sind, die zur selben Zeit aktiv sind, kann die Fairness der Zuteilung optimiert werden, indem von einem TTI zum nächsten die logischen Kanäle in ihrer Position zyklisch verschoben werden: Falls LC 3, 4 und 5 dieselbe Priorität haben, wäre die Reihenfolge zu Beginn des ersten TTI 3, 4, 5, im nächsten 3*=4, 4*=5, 5*=3 und so weiter. Damit wird erreicht, dass zu Beginn eines TTI nicht immer genau derselbe logische Kanal dieser Prioritätsstufe als erster abgefragt wird

Es bezeichnet weiter

| | |
|---|---|
| $S_{LogCh}(t)$: | die Menge der logischen Kanäle (ausgedrückt durch ihre Nummer), die auf denselben Transportkanal TC t abgebildet sind. |
| $S_{LogCh}(t, L)$: | = die Liste der logischen Kanäle (ausgedrückt durch ihre Nummer), die auf denselben Transportkanal TC t abgebildet sind, mit LC 1 beginnend und in aufsteigender Nummerierung bis *ausschließlich* LC L. |
| t(L): | den Transportkanal TC t, auf den LC L abgebildet ist. |
| N(L): | Anzahl von Transportblöcken, die LC L als Teil von TF(t(L)) in einer TFC zugeteilt wurden |

Ein Transportblock enthält eine Anzahl von Bits, die durch die Transportblockgröße ("blocksize") vorgegeben ist.

minBr bzw. maxBr bezeichnen die minimale bzw. maximale zulässige Bitrate bezogen auf einen vorgegebenen Beobachtungszeitraum. minBr und maxBr dienen der Bestimmung weiterer Größen, die weiter unten definiert sind.

Die mittlere Bitrate $R_{average}$ wird definiert auf der Basis eines "Fensters" der Größe W:

$$R_{average} := \frac{s_{Bits}(\ell, W, L)}{W}, \quad \text{mit} \quad s_{Bits}(\ell, W, L) := \sum_{k=\max(0, \ell-W+1)}^{\ell} N(k, L) \cdot blocksize \quad .$$

wobei $s_{Bits}(\ell, W, L)$ die Anzahl von Bits angibt, die - vom $\ell$-ten TTI aus betrachtet, seit die Übertragung auf LC L begonnen wurde - LC L in den letzten W TTIs übertragen hat. Dabei bezeichnet N(k,L) die Anzahl von Transportblöcken von LC L, die für die Übertragung in TTI k zugewiesen wurden. (Im Falle $\ell < W$, d.h. zu Beginn der Übertragung, umfasst das Beobachtungsintervall natürlich nur $\ell$ TTIs.

$N_{min}(\ell,L)$ bezeichnet die kleinste Anzahl von Transportblöcken, die dem LC L zur Übertragung im $\ell$-ten TTI zugewiesen werden kann, so dass die mittlere Bitrate $R_{average}^{min}(\ell)$ bezogen auf die vorangegangenen W TTIs bis zum $\ell$-ten TTI den Wert minBr nicht unterschreitet.

$N_{max}(\ell,L)$ bezeichnet die größte Anzahl von Transportblöcken, die dem LC L zur Übertragung im $\ell$-ten TTI zugewiesen werden können, so dass die mittlere Bitrate $R_{average}^{max}(\ell)$ bezogen auf die vorangegangenen W TTIs bis zum $\ell$-ten TTI den Wert maxBr nicht unterschreitet.

Bei vorgegebenen Werten für minBr and maxBr, erhält man mit diesen Definitionen als Bedingungen für $N_{min}(\ell,L)$ und $N_{max}(\ell,L)$:

$$R_{average}^{min}(\ell) := \frac{s_{Bits}(\ell-1, W-1, L) + N_{min}(\ell, L) \cdot blocksize}{W} \geq minBr$$

$$R_{average}^{max}(\ell) := \frac{s_{Bits}(\ell-1, W-1, L) + N_{max}(\ell, L) \cdot blocksize}{W} \geq maxBr$$

$$\Rightarrow N_{min}(\ell, L) = \text{ceil}\left( \frac{minBr \cdot W - s_{Bits}(\ell-1, W-1, L)}{blocksize} \right)$$

$$\Rightarrow N_{max}(\ell, L) = \text{floor}\left( \frac{maxBr \cdot W - s_{Bits}(\ell-1, W-1, L)}{blocksize} \right)$$

wobei $\text{floor}(x) := \lfloor x \rfloor$ die größte ganze Zahl kleiner oder gleich x, und $\text{ceil}(x) := \lceil x \rceil$ die kleinste ganze Zahl größer oder gleich x bedeutet.

Der Auswahlalgorithmus läuft nun vorzugsweise in folgenden Schritten ab:

1. Bestimme für jeden logischen Kanal LC L die geringste Anzahl von Böcken $N_{min}(L)$, welche in dem gegenwärtigen TTI transportierbar ist (unter Bildung einer gleitenden Summe über die letzten W TTIs), ohne dass die minimale Bitrate für den Kanal LC L unterschritten wird .

Bestimme für jeden logischen Kanal LC L die größte Anzahl von Blöcken $N_{max}(L)$, welche in dem gegenwärtigen TTI transportierbar ist (unter Bildung einer gleitenden Summe über die letzten W TTIs), ohne dass die maximale Bitrate für den Kanal LC L überschritten wird.

2. Setze Iterationsvariable ITER=1 .

Nun wird die folgende Schleife ausgeführt:

3. Setze L:=1 .

4. Setze S1:=S2 (S2 wie oben definiert).

5. Falls ITER=1 (minBr-Bedingung):
Bilde S2 als die Menge der Transportformatkombinationen TFC in S1, die - unter Berücksichtigung aller zugewiesenen Transportblöcke von schon inspizierten logischen Kanälen, die auf denselben Transportkanal abgebildet sind (d.h. die in $S_{LogCh}$(t(L),L) enthalten sind) - eine dem Wert $N_{min}$(L) am nächsten kommende Anzahl von in der Warteschlange von LC L wartenden Transportblöcken oder (unter Verwendung von Füll-Transportblöcken) mehr als diese Anzahl beinhalten. Formal ist S2 (in Abhängigkeit von L) gegeben durch

$$S_2 = \left\{ TFC \in S_1 \mid TF(t(L)) \geq N_1(L) + \sum_{\ell \in S_{LogCh(t(L),L)}} N_1(\ell) =: ? , \right.$$

dabei ist $N_1(L)$

für $BO(L) < N_{min}(L)$ : die größte Anzahl $(\ \leq \min(BO(L), N_{min}(L)\ )\ )$,

für $BO(L) \geq N_{min}(L)$ : die kleinste Anzahl $(\ < N_{max}(L)\ )$, die $N_{min}(L)$ nicht unterschrei

von in der Warteschlange von LC L vorhandenen Transportblöcken, so dass ? ein

Transportformat $TF(t(L))$ für TC $t(L)$ ergibt, das in $TFC$ enthalten ist, d.h. es sind

$$\left. \text{keine Füll - Transportblöcke erforderlich.} \right\}$$

$N_1$(L) wird in der Variablen $\underline{N}$[L] gespeichert.
Falls ITER=2 (maxBr-Bedingung):
Bilde S2 als die Menge der Transportformatkombinationen TFC in S1, die - unter Berücksichtigung aller zugewiesenen Transportblöcke von schon inspizierten logischen Kanälen, die auf denselben Transportkanal abgebildet sind (d.h. die in $S_{LogCh}$(t(L),L) enthalten sind) sowie allen in der ersten Iteration zugewiesenen Transportblöcken - die höchste Anzahl [ $\leq \min(BO(L), N_{max}(L)) - N_1(L)$ ] von in der Warteschlange von LC L wartenden Transportblöcken oder (bei Einfügung von Füll-Transportblöcken) mehr als diese Anzahl beinhalten. Formal ist S2 (in Abhängigkeit von L) gegeben durch

$$S_2 = \left\{ TFC \in S_1 \mid TF(t(L)) \geq \Delta N_2(L) + \sum_{\ell \in S_{LogCh(t(L),L)}} \Delta N_2(\ell) + \sum_{\ell \in S_{LogCh(t)}} N_1(\ell) =: ? , \right.$$

dabei ist $\Delta N_2(L)$ die größte Anzahl

$(\ \leq \min(BO(L), N_{max}(L)) - N_1(L)\ )$ von in der Warteschlange von LC L wartenden Transportblöcken, so dass ? ein Transportformat

$TF(t(L))$ für TC $t(L)$ ergibt, das in $TFC$ enthalten ist, d.h. es sind keine

$$\left. \text{Füll - Transportblöcke erforderlich.} \right\}$$

$\Delta N_2$(L) wird zur Variablen $\underline{N}$[L] addiert.

Die Bedingung $\Delta N_2(L) \leq \min(BO(L), N_{max}(L)) - N_1(L)$ stellt sicher, dass die maximale Datenrate für LC L nicht überschritten wird, wenn weitere $\Delta N_2$(L) Transportblöcke zugswiesen werden, weil aus dieser Bedingung auch $\Delta N_2(L) + N_1(L) \leq \min(BO(L), N_{max}(L))$ folgt.
Falls ITER=3 (optional, kann auch wegfallen, da sie die max-Br-Bedingung aufweicht): UND "für wenigstens einen logischen Kanal L* ist $\underline{N}$[L*]<BO(L*))" UND "S1 enthält mehr als ein Element"
Bilde S2 als die Menge der Transportformatkombinationen TFC in S1, die - unter Berücksichtigung aller zugswiesenen Transportblöcke von schon inspizierten logischen Kanälen, die auf denselben Transportkanal abgebildet sind (d.h. die in $S_{LogCh}$(t(L),L) enthalten sind) sowie allen in der ersten und zweiten Iteration zugewiesenen Transportblöcke- die höchste Anzahl [ $\leq BO(L) - (N_1(L) + \Delta N_2(L))$ ] von in der Warteschlange von LC L wartenden Transportblöcken oder (bei Einfügung von Füll-Transportblöcken) mehr als diese Anzahl beinhalten. Formal ist S2 (in Abhängigkeit von L) gegeben durch

$$S_2 = \left\{ TFC \in S_1 \mid TF(t(L)) \geq \Delta N_3(L) + \sum_{\ell \in S_{LogCh(t(L),L)}} \Delta N_3(\ell) + \sum_{\ell \in S_{LogCh(t)}} \{N_1(\ell) + \Delta N_2(\ell)\} =: ?, \right.$$

$$\text{dabei ist } \Delta N_3(L) \text{ die größte Anzahl } ( \leq BO(L) - (N_1(L) + \Delta N_2(L)) )$$

$$\text{von in der Warteschlange von LC L wartenden Transportblöcken,}$$

$$\text{so das ? eine Transportformat } TF(t(L)) \text{ für TC } t(L) \text{ ergibt, das in}$$

$$\left. TFC \text{ enthalten ist, d.h. ohne Einfügung von Füll - Transportblöcken.} \right\}$$

$\Delta N_3(L)$ wird zur Variablen $\underline{N}[L]$ addiert.

6. Setze L:=L+1.

7. Falls L > $N_{LC}$ UND ITER > 3, Wähle so eine der Transportformatkombinationen TFC in S2 aus, dass damit die kleinste mögliche Bitrate erzielt wird, und beende die Prozedur.

Es wird angemerkt, dass sich die ausgewählte Transportformatkombination auch ergibt als

$$\left( \sum_{L \in S_{LogCh(1)}} \underline{N}[L], \sum_{L \in S_{LogCh(2)}} \underline{N}[L], ...., \sum_{L \in S_{LogCh(N_{TC})}} \underline{N}[L] \right)$$

falls L > $N_{LC}$ UND ITER $\leq$ 3

Setze ITER:=ITER+1.

Setze den Algorithmus mit Schritt 3 fort

falls L $\leq$ $N_{LC}$ UND ITER $\leq$ 3

Setze den Algorithmus mit Schritt 4 fort.

Es wird angemerkt, dass der sog. "Best effort"-Verkehr in der Regel nicht durch eine maximale Bitrate charakterisiert wird, die nicht überschritten werden darf. Daher sollte "Best effort"-Verkehr die niedrigste Priorität (ohne Bitratenbeschränkung) zugewiesen bekommen. Dann würde für diesen Verkehrstyp der verbleibende "Raum" in den TFCs verwendet, so dass keine dritte Iteration erforderlich ist.

Der Ablauf des oben dargestellten Auswahlalgorithmus wird nachfolgend anhand eines Beispiels erläutert: Gegeben seien 6 logische Kanäle LC1 bis LC6, die auf unterschiedliche Transportkanäle TC 1 bis TC3 abgebildet sind. Die nachfolgende Tabelle zeigt die Zuordnung zwischen LCs und TCs sowie zu Beginn eines Übertragungszeitintervalls (TTI) die Pufferbelegungen (buffer occupancy BO) sowie die für das betrachtete Übertragungszeitintervall nach den oben angegebenen Formeln ermittelten Werte für die minimale Bitrate $N_{min}$ und die maximale Bitrate $N_{max}$. Darüber hinaus sind min(BO, $N_{min}$), min(BO, $N_{max}$) aufgeführt, da sie in den aufgeführten Berechnungen benötigt werden:

te erzielt wird, und beende die Prozedur.

| LC | TC | BO | $N_{min}$ | $N_{max}$ | min(BO, $N_{min}$) | min(BO, $N_{max}$) |
|----|----|----|-----------|-----------|--------------------|--------------------|
| 1  | 1  | 4  | 2         | 3         | 2                  | 3                  |
| 2  | 1  | 2  | 3         | 4         | 2                  | 2                  |
| 3  | 2  | 3  | 1         | 2         | 1                  | 2                  |
| 4  | 3  | 8  | 2         | 4         | 2                  | 4                  |

(fortgesetzt)

| LC | TC | BO | $N_{min}$ | $N_{max}$ | min(BO, $N_{min}$) | min(BO, $N_{max}$) |
|----|----|----|-----------|-----------|--------------------|--------------------|
| 5  | 2  | 5  | 2         | 2         | 2                  | 2                  |
| 6  | 3  | 9  | 6         | 8         | 6                  | 8                  |

Als Menge der Transportformatkombinationen, die bei der gegebenen Sendeleistung auf den drei Transportkanälen unterstützt werden kann, sei gegeben: S1={0, 1, 2, 3, 5, 6, 7} x {0, 1, 2, 3, 4, 5, 6, 7} x {0, 4, 6, 8, 10, 11, 12, 13}

Iteration 1 (nur Berücksichtigung der minBr-Bedingung) liefert für die einzelnen logischen Kanäle folgendes, wobei die zu erfüllende Bedingung B(L) gegeben ist durch: "$N_1(L)$ ist die Zahl an vorhandenen Transportblöcken von LC L, die min(BO(L), $N_{min}(L)$) möglichst nahe kommt, so dass θ mit einem gültigen Transportformat (hier ohne Berücksichtigung der semi-static Attribute) für den TC t(L) übereinstimmt."

Für L=1 ist    S2={TFC ∈ S1 |TF(1) ≥ $N_1(1)$=: θ, B(L=1) erfüllt}= {2, 3, 5, 6, 7}x{0, 1, 2, 3, 4, 5, 6, 7}x{0, 4, 6, 8, 10, 11, 12, 13}, da BO(1) ≥ $N_{min}(1)$, $N_1(1)$ ≥ $N_{min}(1)$=2 und θ = $N_1(1)$=2 ein gültiges Transportformat TF(1) ∈ {2, 3, 5, 6, 7}ergibt, also $N_1(1)$=2. Es wird gespeichert $\underline{N}[1]$=$N_1(1)$=2. Für den nächsten Schritt wird gesetzt S1:=S2.

Für L=2 ist    S2={TFC ∈ S1 |TF(1) ≥ $N_1(2)$+$N_1(1)$=: θ, B(L=2) erfüllt}= {3, 5, 6, 7}x{0, 1, 2, 3, 4, 5, 6, 7}x{0, 4, 6, 8, 10, 11, 12, 13}, da wegen BO(2) < $N_{min}(2)$ zu betrachten ist: $N_1(2)$ ≤ min(BO(2), $N_{min}(2)$)=2 und θ = $N_1$(2)+$N_1(1)$=1+2 ein gültiges Transportformat TF(1) ∈ {2, 3, 5, 6, 7}ergibt, also $N_1(2)$=1. Es wird gespeichert $\underline{N}[2]$= $N_1(2)$=1. Für den nächsten Schritt wird gesetzt S1:=S2.

Für L=3 ist    S2={TFC ∈ S1 |TF(2) ≥ $N_1(3)$=: θ, B(L=3) erfüllt}= {3, 5, 6, 7}x{1, 2, 3, 4, 5, 6, 7}x{0, 4, 6, 8, 10, 11, 12, 13}, da BO(3) ≥ $N_{min}(3)$, $N_1(3)$ ≥ $N_{min}(3)$=1 und θ = $N_1(3)$=1 ein gültiges Transportformat TF(2) ∈ {0, 1, 2, 3, 4, 5, 6, 7}ergibt, also $N_1(3)$=1. Es wird gespeichert $\underline{N}[3]$= $N_1(3)$=1. Für den nächsten Schritt wird gesetzt S1:=S2.

Für L=4 ist    S2={TFC ∈ S1 |TF(2) ≥ $N_1(4)$=: θ, B(L=4) erfüllt}= {3, 5, 6, 7}x{1, 2, 3, 4, 5, 6, 7}x{4, 6, 8, 10, 11, 12, 13}, da BO(4) ≥ $N_{min}(4)$, $N_1(4)$ ≥ $N_{min}(4)$=2 und θ = $N_1(4)$=4 ein gültiges Transportformat TF(3) ∈ {0, 4, 6, 8, 10, 11, 12, 13}ergibt, $N_1(4)$=4 Es wird gespeichert $\underline{N}[4]$= $N_1(4)$=4. Für den nächsten Schritt wird gesetzt S1:=S2.

Für L=5 ist    S2={TFC ∈ S1 |TF(2) ≥ $N_1(5)$+$N_1(3)$=: θ, B(L=5) erfüllt}= {3, 5, 6, 7}x{3, 4, 5, 6, 7}x{4, 6, 8, 10, 11, 12, 13}, da BO(5) ≥ $N_{min}(5)$, $N_1(5)$ ≥ $N_{min}(5)$=2 und θ =$N_1(5)$+$N_1(3)$=2+1 ein gültiges Transportformat TF(2) ∈ {1, 2, 3, 4, 5, 6, 7}ergibt, also $N_1(5)$=2. Es wird gespeichert $\underline{N}[5]$= $N_1(5)$=2. Für den nächsten Schritt wird gesetzt S1:=S2.

Für L=6 ist    S2={TFC ∈ S1 |TF(3) ≥ $N_1(6)$+$N_1(4)$=: θ, B(L=6) erfüllt}= {3, 5, 6, 7}x{3, 4, 5, 6, 7}x{10, 11, 12, 13}, da BO(6) ≥ $N_{min}(6)$, $N_1(6)$ ≥ $N_{min}(6)$=6 und θ = $N_1(6)$+$N_1(4)$=6+4 ein gültiges Transportformat TF(3) ∈ {4, 6, 8, 10, 11, 12, 13}ergibt, also $N_1(6)$=6. Es wird gespeichert $\underline{N}[6]$= $N_1(6)$=6. Für den nächsten Schritt wird gesetzt S1:=S2.

Damit wurden TC1 $N_1(1)$+$N_1(2)$=2+1=3 Transportblöcke, TC2 $N_1(3)$+$N_1(5)$=1+2=3 Transportblöcke und TC3 $N_1(4)$+$N_1(6)$=4+6=10 Transportblöcke zugewiesen, d.h. die in der ersten Iteration bestimmte Transportformatkombination ist (3, 3, 10), entsprechend der in S2 enthaltenen Transportformatkombination, die die kleinste Bitrate erzeugt. Infolge der zu kleinen Pufferbelegung auf LC 2 wird nicht (5, 3, 10) erreicht.

In der nächsten Iteration wird die maxBr-Bedingung berücksichtigt, wobei die zu erfüllende Bedingung B(L) nun lautet: "$\Delta N_2(L)$ ist die größte Zahl an vorhandenen Transportblöcken von LC L, die min(BO(L), $N_{max}(L)$)-$N_1(L)$ nicht überschreitet, so dass θ mit einem gültigen Transportformat (hier ohne Berücksichtigung der semi-static Attribute) für den TC t(L) entspricht."

Für L=1 ist    S2={TFC ∈ S1 |TF(1) ≥ $\Delta N_2(1)$+$N_1(1)$+$N_1(2)$=: θ, B(L=1) erfüllt}= {3, 5, 6, 7}x{3, 4, 5, 6, 7}x{10, 11, 12, 13}, da $\Delta N_2(1)$ ≤ min(BO(1), $N_{max}(1)$)-$N_1(1)$=3-2=1 und θ =$\Delta N_2(1)$+$N_1(1)$+$N_1(2)$ =1+2+1 kein gültiges Transportformat TF(1) ∈ {3, 5, 6, 7}ergibt, also $\Delta N_2(1)$=0. Es wird gespeichert $\underline{N}[1]$=$N_1(1)$+$\Delta N_2(1)$ =2+0=2 (unverändert). Für den nächsten Schritt wird gesetzt S1:=S2.

Für L=2 ist $\quad$ S2={TFC $\in$ S1 |TF(1) $\geq \Delta N_2(2)+\Delta N_2(1)+N_1(1)+N_1(2)=:$ θ, B(L=2) erfüllt}={3, 5, 6, 7}x{3, 4, 5, 6, 7}x{10, 11, 12, 13}, da $\Delta N_2(2) \leq$ min(BO(2), $N_{max}(2))-N_1(2)=2-1=1$ und θ = $\Delta N_2(2)+\Delta N_2(1)+N_1(1)+N_1(2)=1+2+1$ kein gültiges Transportformat TF(1) $\in$ {3, 5, 6, 7}ergibt, also $\Delta N_2(2)=0$ Es wird gespeichert $\underline{N}[2]= N_1(2)+\Delta N_2(2)=1+0=1$ (unverändert). Für den nächsten Schritt wird gesetzt S1:=S2.

Für L=3 ist $\quad$ S2={TFC $\in$ S1 |TF(2) $\geq \Delta N_2(3)+N_1(3)+N_1(5)=:$ θ, B(L=3) erfüllt}= {3, 5, 6, 7}x{4, 5, 6, 7}x{10, 11, 12, 13}, da $\Delta N_2(3) \leq$ min(BO(3), $N_{max}(3))-N_1(3)=2-1=1$ und θ = $\Delta N_2(3)+N_1(3)+N_1(5)=1+1+2=4$ ein gültiges Transportformat TF(1) $\in$ {3, 4, 5, 6, 7}ergibt, also $\Delta N_2(3)=1$. Es wird gespeichert N[3]=$N_1(3)+\Delta N_2(3)=1+1=2$. Für den nächsten Schritt wird gesetzt S1:=S2.

Für L=4 ist $\quad$ S2={TFC $\in$ S1 |TF(3) $\geq \Delta N_2(4)+N_1(4)+N_1(6)=:$ θ, B(L=4) erfüllt}= {3, 5, 6, 7}x{4, 5, 6, 7}x{10, 11, 12, 13}, da $\Delta N_2(4) \leq$ min(BO(4), $N_{max}(4))-N_1(4)=4-4=0$ d.h. $\Delta N_2(4)=0$. Es wird gespeichert $\underline{N}[4]= N_1(4)+\Delta N_2(4)=4+0=4$ (unverändert). Für den nächsten Schritt wird gesetzt S1:=S2.

Für L=5 ist $\quad$ S2={TFC $\in$ S1 |TF(2) $\geq \Delta N_2(5)+\Delta N_2(3)+N_1(3)+N_1(5)=:$ θ, B(L=5) erfüllt}={3, 5, 6, 7}x{4, 5, 6, 7}x{10, 11, 12, 13}, da $\Delta N_2(5) \leq$ min(BO(5), $N_{max}(5))-N_1(5)=2-2=0$, d.h. $\Delta N_2(5)=0$ Es wird gespeichert $\underline{N}[5]= N_1(5)+\Delta N_2(5)=2+0=2$ (unverändert). Für den nächsten Schritt wird gesetzt S1:=S2.

Für L=6 ist $\quad$ S2={TFC $\in$ S1 |TF(3) $\geq \Delta N_2(6)+\Delta N_2(4)+N_1(4)+N_1(6)=:$ θ, B(L=6) erfüllt}={3, 5, 6, 7}x{4, 5, 6, 7}x{12, 13}, da $\Delta N_2(6) \leq$ min(BO(6), $N_{max}(6))-N_1(6)=8-6=2$ und θ =$\Delta N_2(6)+ \Delta N_2(4)+N_1(4)+N_1(6)=2+0+4+6=12$ ein gültiges Transportformat TF(3) $\in$ {10, 11, 12, 13}ergibt. Es wird gespeichert $\underline{N}[6]= N_1(6)+\Delta N_2(6)=6+2=8$. Für den nächsten Schritt wird gesetzt S1:=S2.

Damit wurden TC1 $N_1(1)+\Delta N_2(1)+N_1(2)+\Delta N_2(2)=2+0+1+0=3$ Transportblöcke, TC2 $N_1(3)+\Delta N_2(3)+N_1(5)+\Delta N_2(5)=1+1+2+0=4$ Transportblöcke und TC3 $N_1(4)+\Delta N_2(4)+ N_1(6)+\Delta N_2(6)=4+0+6+2=12$ Transportblöcke zugewiesen, d.h. die in der zweiten Iteration bestimmte Transportformatkombination ist (3, 4, 12), entsprechend der in S2 enthaltenen Transportformatkombination, die die kleinste Bitrate erzeugt. Die zweite Iteration führt nicht auf (4, 4, 12), weil TC 1 das Transportformat "4 Blöcke" nicht enthält, während $N_{max}(1)=3$ durchaus, auf eine Summe von 4 zugewiesenen Blöcken führen könnte.

In der dritten Iteration wird versucht, Transportblöcke über die maxBr-Bedingung hinaus zuzuweisen.

Die zu erfüllende Bedingung B(L) lautet nun: "$\Delta N_3(L)$ ist die größte Zahl an vorhandenen Transportblöcken von LC L, die BO(L)-($N_1(L)+\Delta N_2(L)$) nicht überschreitet, so dass θ mit einem gültigen Transportformat (hier ohne Berücksichtigung der semi-static Attribute) für den TC t(L) entspricht."

Für L=1 ist $\quad$ S2={TFC $\in$ S1 |TF(1) $\geq \Delta N_3(1)+\Delta N_2(1)+\Delta N_2(2)+N_1(1)+N_1(2)=:$ θ, B(L=1) erfüllt}={5, 6, 7}x{4, 5, 6, 7}x{12,13}, da $\Delta N_3(1) \leq$ BO(1)-($N_1(1)+\Delta N_2(1)$) =4-2=2 und θ = $\Delta N_3(1)+\Delta N_2(1)+ \Delta N_2(2)+N_1(1)+N_1(2)$ = 2+0+0+2+1=5 ein gültiges Transportformat TF(1) $\in$ {3, 5, 6, 7}ergibt, also $\Delta N_3(1)=2$. Es wird gespeichert $\underline{N}[1]= N_1(1)+\Delta N_2(1)+\Delta N_3(1)=2+0+2=4$. Für den nächsten Schritt wird gesetzt S1:=S2.

Für L=2 ist $\quad$ S2={TFC $\in$ S1 |TF(1) $\geq \Delta N_3(2)+\Delta N_3(1)+ \Delta N_2(1)+ \Delta N_2(2)+N_1(1)+N_1(2)=:$ θ, B(L=2) erfüllt}= {6, 7}x{4, 5, 6, 7}x{12, 13}, da $\Delta N_3(2) \leq$ BO(2)-($N_1(2)+\Delta N_2(2)$) = 2-1=1 und θ = $\Delta N_3(2)+\Delta N_3(1)+ \Delta N_2(1)+ \Delta N_2(2)+N_1(1)+N_1(2)$ = 1+2+0+0+2+1=6 ein gültiges Transportformat TF(1) $\in$ {5, 6, 7}ergibt, also $\Delta N_3(2)=1$. Es wird gespeichert $\underline{N}[2]= N_1(2)+\Delta N_2(2)+\Delta N_3(2)=1+0+1=2$. Für den nächsten Schritt wird gesetzt S1:=S2.

Für L=3 ist $\quad$ S2={TFC $\in$ S1 |TF(2) $\geq \Delta N_3(3)+\Delta N_2(3)+\Delta N_2(5)+N_1(3)+N_1(5)=:$ θ, B(L=3) erfüllt}= {6, 7}x{5, 6, 7}x{12, 13}, da $\Delta N_3(3) \leq$ BO(3)-($N_1(3)+\Delta N_2(3)$) =3-(1+1)=1 und θ = $\Delta N_3(3)+\Delta N_2(3)+\Delta N_2(5)+N_1(3)+N_1(5)$ = 1+1+0+1+2=5 ein gültiges Transportformat TF(1) $\in$ {4, 5, 6, 7}ergibt, d.h. $\Delta N_3(3)=1$. Es wird gespeichert $\underline{N}[3]= N_1(3)+\Delta N_2(3)+\Delta N_3(3)=1+1+1=3$. Für den nächsten Schritt wird gesetzt S1:=S2.

Für L=4 ist $\quad$ S2={TFC $\in$ S1 |TF(3) $\geq \Delta N_3(4)+\Delta N_2(4)+N_1(4)+\Delta N_2(6)+N_1(6)=:$ θ, B(L=4) erfüllt}={6, 7}x{5, 6, 7}x{13}, da $\Delta N_3(4) \leq$ BO(4)-($N_1(4)+\Delta N_2(4)$) =8-(4+0)=4 und θ = $\Delta N_3(4)+\Delta N_2(4)+N_1(4)+ \Delta N_2(6)+N_1(6)$ =1+0+4+2+6=13 ein gültiges Transportformat TF(1) $\in$ {12, 13}ergibt, d.h. $\Delta N_3(4)=1$. Es wird gespeichert $\underline{N}[4]= N_1(4)+\Delta N_2(4)+\Delta N_3(4)=4+0+1=5$. Für den nächsten Schritt wird gesetzt S1:=S2.

Für L=5 ist $\quad$ S2={TFC $\in$ S1 |TF(2) $\geq \Delta N_3(5)+\Delta N_3(3)+\Delta N_2(3)+\Delta N_2(5)+N_1(3)+N_1(5)=:$ θ, B(L=5) erfüllt}= {6, 7}x{7}x{13}, da $\Delta N_3(5) \leq$ BO(5)-($N_1(5)+\Delta N_2(5)$) =5-(2+0)=3 und θ = $\Delta N_3(5)+\Delta N_3(3)+\Delta N_2(3)+\Delta N_2(5)+N_1(3)+N_1(5)$ = 2+1+1+0+1+2 = 7 ein gültiges Transportformat TF(1) $\in$ {5, 6, 7}ergibt, d.h. $\Delta N_3(5)=2$. Es wird gespeichert $\underline{N}[5]= N_1(5)+\Delta N_2(5)+\Delta N_3(5)=2+0+2=4$. Für den nächsten Schritt wird gesetzt S1:=S2.

Für L=6 ist  $S2=\{TFC \in S1 \,|TF(3) \geq \Delta N_3(6)+ \Delta N_3(4)+\Delta N_2(4)+N_1(4)+ \Delta N_2(6)+N_1(6)=: \theta, B(L=6) \text{ erfüllt}\}=\{6, 7\}x\{7\}x \{13\}$, da $\Delta N_3(6) \leq BO(6)-(N_1(6)+\Delta N_2(6)) =9-(6+2)=1$ und $\theta = \Delta N_3(6)+\Delta N_3(4)+\Delta N_2(4)+N_1(4)+ \Delta N_2(6)+N_1 (6)= 1+1+0+4+2+6=14$ kein gültiges Transportformat $TF(1) \in \{13\}$ergibt, d.h. $\Delta N_3(6)=0$. Es wird gespeichert $\underline{N}[6]= N_1(6)+\Delta N_2(6)+\Delta N_3(6)=6+2+0=8$. Für den nächsten Schritt wird gesetzt S1:=S2.

Damit wurden TC1 $N_1(1)+\Delta N_2(1)+\Delta N_3(1)+N_1(2)+\Delta N_2(2)+\Delta N_3(2)=2+0+2+1+0+1=6$ Transportblöcke, TC2 $N_1 (3)+\Delta N_2(3)+\Delta N_3(3)+N_1(5)+\Delta N_2(5)+\Delta N_3(5)=1+1+1+2+0+2=7$ Transportblöcke und TC3 $N_1(4)+\Delta N_2(4)+\Delta N_3(4)+N_1(6) +\Delta N_2(6)+\Delta N_3(6)= 4+0+1+6+2+0=13$ Transportblöcke zugewiesen, d.h. die in der dritten Iteration bestimmte Transportformatkombination ist (6, 7, 13), entsprechend der in S2 enthaltenen Transportformatkombination, die die kleinste Bitrate erzeugt.

**Patentansprüche**

1.   Netzwerk mit einer ersten Anzahl von logischen Kanälen, denen eine zweite Anzahl von Transportkanälen zugeordnet ist,
   wobei die Transportkanäle zur Übertragung von aus Paketeinheiten der logischen Kanäle gebildeten Transportblöcken vorgesehen sind,
   wobei den Transportkanälen eine Anzahl von gültigen Transport-Format-Kombinationen zugewiesen ist, welche die zur Übertragung vorgesehenen Transportblöcke auf jedem Transportkanal angeben;
   wobei ein Auswahlalgorithmus zur Auswahl der Transport-Format-Kombinationen vorgesehen ist
   und wobei vorgesehen ist, die Auswahl der Transport-Format-Kombinationen unter Berücksichtigung einer für den jeweiligen logischen Kanal vorgesehenen minimalen Bitrate durchzuführen.

2.   Netzwerk nach Anspruch 1,
   **dadurch gekennzeichnet,**
   **dass** vorgesehen ist, die Auswahl der Transport-Format-Kombinationen unter Berücksichtigung einer für den jeweiligen logischen Kanal vorgesehenen maximalen Bitrate durchzuführen.

3.   Netzwerk nach Anspruch 1,
   **dadurch gekennzeichnet,**
   **dass** für den Auswahlalgorithmus eine erste Zuteilungssequenz
   vorgesehen ist, mittels derer den Transportkanälen Paketeinheiten der logischen Kanäle zugewiesen werden,
   wobei die Zuteilung für die einzelnen logischen Kanäle nach folgenden Kriterien erfolgt:

   a.) es werden jeweils nur so viel Paketeinheiten zugewiesen, dass die Summe der dem jeweiligen Transportkanal insgesamt zugewiesenen Paketeinheiten unter Berücksichtigung von schon betrachteten und auf denselben Transportkanal abgebildeten logischen Kanälen einem Transportformat einer gültigen Transport-Format-Kombination entspricht,

   b.) die Anzahl der jeweils zugewiesenen Paketeinheiten wird so gewählt, dass sie der für den jeweiligen logischen Kanal vorgesehenen minimalen Bitrate möglichst nahe kommt,
   wobei Kriterium a.) Vorrang hat gegenüber Kriterium b.),
   und wobei eine zweite Zuteilungssequenz zur Zuweisung
   weiterer Paketeinheiten vorgesehen ist.

4.   Netzwerk nach Anspruch 3,
   **dadurch gekennzeichnet,**
   **dass** die zweite Zuteilungssequenz zur Zuweisung weiterer Paketeinheiten nach folgenden Kriterien vorgesehen ist:

   a) es werden jeweils nur so viel Paketeinheiten zugswiesen, dass die Summe der dem jeweiligen Transportkanal insgesamt zugewiesenen Paketeinheiten unter Berücksichtigung von schon betrachteten und auf denselben Transportkanal abgebildeten logischen Kanälen einem Transportformat einer gültigen Transport-Format-Kombination entspricht,

   c.) die Anzahl der jeweils zugewiesenen Paketeinheiten wird so gewählt, dass sie die für den jeweiligen logischen Kanal vorgesehene maximale Bitrate nicht überschreitet,

d.) es werden jeweils so viele Paketeinheiten wie möglich zugewiesen,

wobei Kriterium a.) Vorrang hat gegenüber den Kriterien c.) und d) und Kriterium

c.) Vorrang hat gegenüber dem Kriterium d)

5. Netzwerk nach Anspruch 4,
   **dadurch gekennzeichnet,**
   **dass** eine dritte Zuteilungssequenz zur Zuweisung weiterer Paketeinheiten nach folgenden Kriterien vorgesehen ist:

   a.) es werden jeweils nur so viel Paketeinheiten zugewiesen, dass die Summe der dem jeweiligen Transportkanal insgesamt zugewiesenen Paketeinheiten unter Berücksichtigung von schon betrachteten und auf denselben Transportkanal abgebildeten logischen Kanälen einem Transportformat einer gültigen Transport-Format-Kombination entspricht,

   d.) es werden jeweils so viel Paketeinheiten wie möglich zugewiesen,

   wobei Kriterium a.) Vorrang hat gegenüber Kriterium d).

6. Netzwerk nach Anspruch 3,
   **dadurch gekennzeichnet,**
   **dass** die zweite Zuteilungssequenz zur Zuweisung weiterer Paketeinheiten nach folgenden Kriterien vorgesehen ist:

   a.) es werden jeweils nur so viele Paketeinheiten zugewiesen, dass die Summe der dem jeweiligen Transportkanal insgesamt zugewiesenen Paketeinheiten unter Berücksichtigung von schon betrachteten und auf denselben Transportkanal abgebildeten logischen Kanälen einem Transportformat einer gültigen Transport-Format-Kombination entspricht,

   c.) die Anzahl der jeweils zugewiesenen Paketeinheiten wird so gewählt, dass sie die für den jeweiligen logischen Kanal vorgesehene maximale Bitrate nicht überschreitet,

   d.) es werden jeweils so viel Paketeinheiten wie möglich zugewiesen,

   wobei Kriterium a.) Vorrang hat gegenüber den Kriterien c.) und d.) und Kriterium

   c.) Vorrang hat gegenüber dem Kriterium d.) und

   wobei jeweils für den letzten logischen Kanal (für die letzten logischen Kanäle), der einem Transportkanal zugeordnet ist, Kriterium c.) aufgehoben ist.

7. Netzwerk nach Anspruch 1,
   **dadurch gekennzeichnet,**
   **dass** eine unterschiedliche Priorität aufweisende logische Kanäle auf genau einen Transportkanal abgebildet sind und dass das Netzwerk zur Durchführung der Zuteilung der Paketeinheiten in der Reihenfolge der Priorität der logischen Kanäle vorgesehen ist.

8. Netzwerk nach Anspruch 1,
   **dadurch gekennzeichnet,**
   **dass** das Netzwerk ein drahtloses Netzwerk mit einer Funknetzwerk-Steuerung ist und mehrere zugeordnete Terminals aufweist, die jeweils zur Übertragung von aus Paketeinheiten eines logischen Kanals gebildeten Transportblöcken auf einem Transportkanal vorgesehen sind, dem ein Übertragungszeitintervall aus wenigstens einem Funkrahmen zugeordnet ist und der aktiv ist, wenn der Beginn seines Übertragungszeitintervalls und eines Funkrahmens übereinstimmen.

9. Netzwerk nach Anspruch 8,
   **dadurch gekennzeichnet,**

**dass** die MAC-Schicht (MAC = Medium Access Control) der Funknetzwerk-Steuerung oder eines Terminals zur Auswahl der jeweiligen Transportformate vorgesehen ist.

10. Netzwerk nach Anspruch 8,
**dadurch gekennzeichnet,**
**dass** eine RLC-Schicht (RLC = Radio Link Control) der Funknetzwerk-Steuerung oder eines Terminal zur Speicherung von zur Übertragung vorgesehenen Paketeinheiten und die MAC-Schicht zur Bildung eines Transportblocks aus einer über einen logischen Kanal gelieferten Paketeinheit vorgesehen ist.

11. Funknetzwerksteuerung für ein Netzwerk mit einer ersten Anzahl von logischen Kanälen, denen eine zweite Anzahl von Transportkanälen zugeordnet ist,
wobei die Funknetzwerksteuerung zur Bildung von Transportblöcken aus Paketeinheiten der logischen Kanäle und zur Übertragung der Transportblöcke über die Transportkanäle vorgesehen ist,
wobei den Transportkanälen eine Anzahl von gültigen Transport-Format-Kombinationen zugewiesen ist, welche die zur Übertragung vorgesehenen Transportblöcke auf jedem Transportkanal angeben,
wobei in der Funknetzwerksteuerung ein Auswahlalgorithmus zur Auswahl der Transport-Format-Kombinationen vorgesehen ist
und wobei vorgesehen ist, die Auswahl der Transport-Format-Kombinationen unter Berücksichtigung einer für den jeweiligen logischen Kanal vorgesehenen minimalen Bitrate durchzuführen.

12. Terminal für ein Netzwerk mit einer ersten Anzahl von logischen Kanälen, denen eine zweite Anzahl von Transportkanälen zugeordnet ist,
wobei das Terminal zur Übertragung von aus Paketeinheiten der logischen Kanäle gebildeten Transportblöcken vorgesehen ist,
wobei den Transportkanälen eine Anzahl von gültigen Transport-Format-Kombinationen zugewiesen ist, welche die zur Übertragung vorgesehenen Transportblöcke auf jedem Transportkanal angeben,
wobei ein Auswahlalgorithmus zur Auswahl der Transport-Format-Kombinationen vorgesehen ist
und wobei vorgesehen ist, die Auswahl der Transport-Format-Kombinationen unter Berücksichtigung einer für den jeweiligen logischen Kanal vorgesehenen minimalen Bitrate durchzuführen.

13. Verfahren zur Steuerung eines Netzwerkes mit einer ersten Anzahl von logischen Kanälen, denen eine zweite Anzahl von Transportkanälen zugeordnet ist,
wobei die Transportkanäle zur Übertragung von aus Paketeinheiten der logischen Kanäle gebildeten Transportblöcken vorgesehen sind,
wobei den Transportkanälen eine Anzahl von gültigen Transport-Format-Kombinationen zugewiesen ist, welche die zur Übertragung vorgesehenen Transportblöcke auf jedem Transportkanal angeben,
wobei ein Auswahlalgorithmus zur Auswahl der Transport-Format-Kombinationen vorgesehen ist
und wobei vorgesehen ist, die Auswahl der Transport-Format-Kombinationen unter Berücksichtigung einer für den jeweiligen logischen Kanal vorgesehenen minimalen Bitrate durchzuführen.

FIG. 1

FIG. 2